# FASCICULE DE BREVET EUROPEEN

(11) **EP 3 134 322 B1**
(45) Date de publication et mention de la délivrance du brevet: **20.11.2019**
(21) Numéro de dépôt: 15725768.4
(22) Date de dépôt: 21.04.2015
(51) Int. Cl.: B64G 1/00, B64G 1/10, B64G 1/24

(54) **PROCÉDÉ DE DÉPLOIEMENT D'UNE CONSTELLATION DE SATELLITES**
VERFAHREN ZUM AUFSTELLEN EINER SATELLITENKONSTELLATION
METHOD OF DEPLOYING A SATELLITE CONSTELLATION

(30) Priorité: 24.04.2014 FR 1453690
(43) Date de publication de la demande: 01.03.2017
(73) Titulaire: SAFRAN AIRCRAFT ENGINES, 75015 Paris (FR)
(72) Inventeur: MARCHANDISE, Frédéric, 27200 Vernon (FR); SIMONTACCHI, Pamela, 78580 Maule (FR); MATHIEU, Perrine, 55500 Foucheres-aux-Bois (FR)
(74) Mandataire: Gilbey, Vincent
(86) Numéro de dépôt international: PCT/FR2015/051074
(87) Numéro de publication internationale: WO 2015/162370

(56) Documents cités:
- US-A- 5 199 672
- US-A- 5 393 017
- US-B1- 7 832 687

## Description

### DOMAINE TECHNIQUE GENERAL

La présente invention concerne le lancement et la mise en orbite de satellites, et plus particulièrement le déploiement d'une constellation de satellites.

### ETAT DE L'ART

Les constellations de satellites sont utilisées pour de nombreuses applications nécessitant une couverture importante et continue.

De telles constellations de satellites comprennent un ensemble de satellites décrivant des orbites distinctes autour de la Terre.

Cependant, le déploiement d'une pluralité de satellites selon des orbites distinctes, communément décalées angulairement les unes par rapport aux autres nécessite l'utilisation de plusieurs lanceurs, ce qui est très contraignant.

A titre d'exemple une constellation de satellites d'observation en orbite basse, avec une observation par heure, nécessite le déploiement de 12 satellites selon des orbites différentes. Or, le déploiement d'une telle constellation de satellites nécessite actuellement 12 lancements distincts ce qui est rédhibitoire, ou nécessite l'embarquement d'une quantité d'ergol très importante afin de réaliser la modification des orbites des satellites suite à leur déploiement, ce qui est également très problématique en termes de masse embarquée.

Des solutions pour le déploiement de plusieurs satellites au moyen d'un lanceur unique ont été proposées. Toutefois, ces solutions reposent essentiellement sur une capacité du lanceur à atteindre des orbites successives pour y déployer les différentes satellites, ou à une capacité des satellites eux-mêmes à modifier leur orbite une fois déployés, ce qui demeure problématique en termes de masse embarquée du fait de la quantité d'ergol requise.

La présente invention vise ainsi à proposer une solution à cette problématique.

Le document US 7 832 687 divulgue un procédé de déploiement d'une pluralité de satellites à partir d'une seule orbite initiale. Il décrit qu'un premier satellite est mis sur son orbite finale à partir de l'orbite initiale en utilisant ses propres moyens de propulsion tandis qu'un deuxième satellite reste sur l'orbite initiale. Pendant un certain temps le plan d'orbite finale du premier satellite se modifie progressivement par rapport au plan d'orbite initiale sur lequel le deuxième satellite se trouve. Quand le plan d'orbite du deuxième satellite correspond à un plan désiré, ledit deuxième satellite est mis sur son orbite finale.

### PRESENTATION DE L'INVENTION

A cet effet, la présente invention propose un procédé de déploiement d'une constellation de satellites, dans lequel
- au moyen d'un lanceur unique, on déploie une pluralité de satellites à une même altitude initiale sur une même orbite initiale,
- lesdits satellites sont pilotés de manière à ce que selon l'orbite initiale, chaque satellite atteigne une altitude de dérive parmi un ensemble de dérive, à laquelle les orbites des différents satellites se décalent les unes par rapport aux autres sous l'effet du potentiel gravitationnel terrestre,
- les satellites sont pilotés de manière à être déplacés séquentiellement pour atteindre une même altitude finale, ledit déplacement séquentiel étant réalisé de manière à ce que les satellites décrivent des orbites finales décalées angulairement les unes par rapport aux autres, c'est-à-dire ayant une même inclinaison par rapport au plan équatorial, mais présentant des longitudes du nœud ascendant distinctes.

Selon un mode de réalisation particulier, les orbites finales des satellites sont décalées angulairement les unes aux autres autour de l'axe de rotation terrestre.

Lesdites orbites finales présentent alors typiquement un décalage angulaire constant entre deux orbites finales successives.

L'ensemble de dérive comprend par exemple une altitude de dérive haute et une altitude de dérive basse, ayant respectivement une altitude plus élevée et plus faible que l'altitude initiale.

L'altitude de départ l'altitude de dérive haute, l'altitude de dérive basse et l'altitude finale sont alors par exemple comprises entre 150 km et 75000 km.

L'altitude finale desdits satellites est alors typiquement comprise entre l'altitude initiale et l'altitude de dérive basse.

L'altitude finale est par exemple comprise entre 200 et 800 km. L'altitude de départ alors par exemple est de 800 km, l'altitude de dérive haute est de 1500 km, l'altitude de dérive basse est de 270 km et l'altitude finale est de 420 km.

Selon une autre variante, l'altitude de départ est comprise entre 33000 et 38000 km, et l'altitude finale est comprise entre 20000 et 25000 km.

Les orbites finales desdits satellites ont typiquement des inclinaisons distinctes par rapport à leurs orbites initiales.

La présente invention permet ainsi de déployer tout ou partie d'une constellation de satellites en un lancement unique, en utilisant de manière avantageuse le potentiel gravitationnel terrestre afin de modifier les orbites de tout ou partie des satellites ainsi déployés.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- Les figures 1 et 2 illustrent schématiquement les paramètres de l'orbite d'un satellite ;
- La figure 3 est un diagramme schématisant les étapes du procédé selon un aspect de l'invention,
- La figure 4 représente schématiquement un exemple de procédé de déploiement d'une constellation de satellite selon un aspect de l'invention,
- La figure 5 illustre un exemple d'évolution de la dérive des différentes orbites des satellites dans le cas de l'exemple présenté sur la figure 4,
- La figure 6 présente un exemple de constellation de satellites déployés au moyen d'un procédé selon un aspect de l'invention.

Sur l'ensemble des figures, les éléments en commun sont repérés par des références numériques identiques.

### DESCRIPTION DETAILLEE

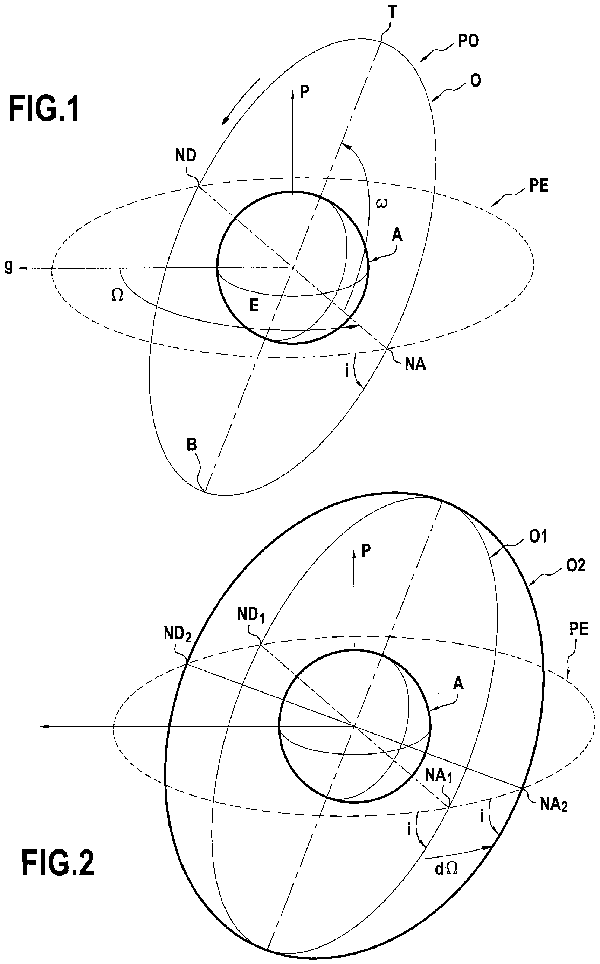

Les figures 1 et 2 illustrent schématiquement les paramètres de l'orbite d'un satellite.

On représente sur ces figures la Terre A par une sphère, l'équateur E et l'axe P passant par les pôles de la Terre.

On définit par ailleurs sur ces figures :
- un plan équatorial PE, contenant l'équateur E,
- le point vernal g, défini comme étant l'intersection entre l'écliptique et l'équateur céleste ; on définit également une direction de point vernal reliant le point vernal et le centre de la Terre.

L'orbite O d'un satellite autour de la Terre est représentée schématiquement sur les figures 1 et 2.

On repère sur ces figures :
- l'inclinaison i du plan d'orbite PO dans lequel est contenue l'orbite par rapport au plan équatorial PE. Une inclinaison nulle indique que le plan d'orbite PO est confondu avec le plan équatorial PE ;
- le sens de déplacement du satellite, repéré de manière arbitraire par une flèche,
- le nœud ascendant NA, correspondant à l'intersection entre l'orbite et le plan équatorial PE lorsque le satellite passe de l'hémisphère sud à hémisphère nord,
- le nœud descendant ND, correspondant à l'intersection entre l'orbite et le plan équatorial PE lorsque le satellite passe de l'hémisphère sud à hémisphère nord,
- l'apogée B et la périgée T, correspondant dans le cas d'une orbite elliptique respectivement au point d'altitude la plus élevée et au point d'altitude la plus fable. L'inclinaison du périgée par rapport à la ligne des nœuds est mesurée par l'argument du périgée ω. Dans le mode de réalisation représenté, l'orbite O est circulaire, l'apogée T et le périgée B sont sensiblement à la même altitude, et ω = 90°.

On définit ainsi la longitude du nœud ascendant Ω, qui est l'angle entre la direction de point vernal g et la ligne reliant le nœud descendant ND au nœud ascendant NA. La longitude du nœud ascendant Ω est mesurée en allant de la direction de point vernal g vers le nœud ascendant NA, correspondant avec le sens de rotation de la Terre également indiqué par une flèche sur la figure 1.

On peut ainsi définir un plan d'orbite au moyen de l'inclinaison i et de la longitude du nœud ascendant Ω.

Le satellite décrit alors une orbite circulaire ou elliptique dans le plan d'orbite PO ainsi défini.

Dans le cas d'une orbite circulaire, l'altitude est alors sensiblement constante.

Dans le cas d'une orbite elliptique, l'altitude varie entre une valeur maximale lorsque le satellite est à l'apogée de sa trajectoire, et une valeur minimale lorsque le satellite est au périgée de sa trajectoire. Pour une telle orbite elliptique, on désignera par altitude une altitude en un point donné de l'orbite, par exemple l'altitude au nœud ascendant, au nœud descendant, au périgée ou à l'apogée.

La figure 2 représente deux orbites circulaires O1 et O2 de même inclinaison i, et ayant des longitudes de nœud ascendant distinctes, ce qui entraine un décalage dΩ des orbites O1 et O2.

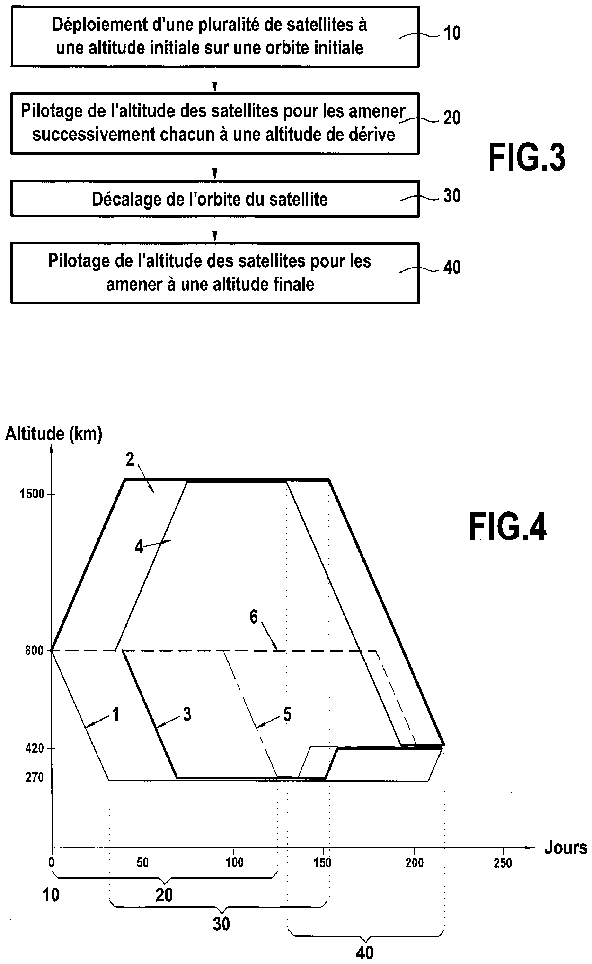

La figure 3 est un diagramme illustrant les étapes du procédé selon un aspect de l'invention.

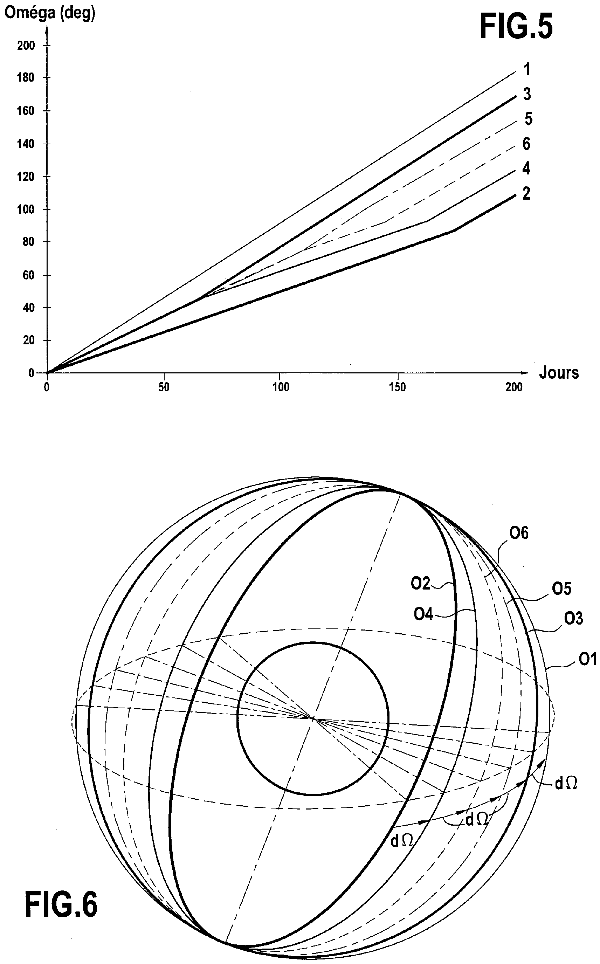

Les figures 4 et 5 illustrent un exemple de réalisation du procédé selon un aspect de l'invention. La figure 4 représente l'évolution de l'altitude des satellites d'une constellation de satellites déployée au moyen d'une méthode selon un aspect de l'invention. La figure 5 représente l'évolution de la longitude du nœud ascendant Ω de ces satellites en fonction du temps.

Lors d'une première étape de déploiement 10, on déploie une pluralité de satellites d'une constellation de satellites au moyen d'un lanceur unique.

Cette pluralité de satellites peut correspondre à tout ou partie des satellites d'une constellation de satellites. Dans l'exemple présenté ci-après et illustré sur les figures 4 et 5, on considérera le déploiement d'un ensemble de 6 satellites lors d'un unique lancement.

Le déploiement de la pluralité de satellites est effectué à une altitude initiale commune, selon une orbite initiale commune.

On représente sur les figures 4 et 5 cette étape de déploiement à t = 0 ; les six satellites déployés lors du lancement unique sont à une même altitude et ont une même orbite.

Une fois l'étape de déploiement 10 effectuée, on réalise une étape de pilotage 20 de l'altitude des satellites ainsi déployés, de manière à les amener chacun à une altitude de dérive, tout en demeurant sur le plan d'orbite initiale.

Les altitudes de dérives sont choisies parmi un ensemble de dérive comprenant une pluralité de valeurs d'altitude, et comprenant par exemple l'altitude initiale.

Dans l'exemple représenté, l'ensemble de dérive comprend trois altitudes :
- l'altitude initiale,
- une altitude de dérive haute, plus élevée que l'altitude initiale, et
- une altitude de dérive basse, moins élevée que l'altitude initiale.

Dans cet exemple, l'altitude initiale est de 800km, l'altitude de dérive haute est de 1500km et l'altitude de dérive basse est de 270km.

D'autres modes de réalisation sont possibles, comprenant par exemple un nombre plus important ou plus restreint d'altitudes dans l'ensemble de dérive, et comprenant ou non l'altitude initiale et/ou l'altitude finale dans l'ensemble de dérive.

De manière générale, l'altitude de départ l'altitude de dérive haute, l'altitude de dérive basse et l'altitude finale sont comprises entre 150 km et 75000 km.

A titre d'exemple, l'altitude de départ peut être comprise entre 33000 et 38000 km, et l'altitude finale entre 20000 et 25000 km.

Dans le cas où certains satellites de l'ensemble ont une altitude de dérive peu élevée, il peut alors être nécessaire d'appliquer un effort de poussée afin de compenser la trainée atmosphérique et ainsi de maintenir le satellite à l'altitude de dérive.

La figure 4 représente un exemple d'échelonnement sur la durée de l'étape de pilotage 20 de l'altitude des satellites.

Comme représenté sur cette figure, deux satellites sont pilotés de manière à quitter l'altitude initiale pour atteindre leur altitude de dérive dès que l'étape de déploiement 10 est effectuée.

Trois des autres satellites sont ensuite amenés successivement à leurs orbites de dérive ; deux satellites sont ainsi successivement pilotés pour atteindre leurs orbites de dérive respectives environs 50 jours après l'étape de déploiement 10, et un cinquième satellite est piloté pour atteindre son orbite de dérive environs 100 jours après l'étape de déploiement 10. Le sixième satellite demeure quant à lui sur l'orbite initiale.

Dès lors que leurs altitudes diffèrent, les différents satellites se décalent progressivement les uns par rapport aux autres lors d'une étape de décalage 30.

En effet, la Terre n'est pas une sphère parfaite ; elle présente notamment un aplatissement à ses pôles, ce qui introduit une perturbation significative du potentiel gravitationnel principal.

Cette perturbation entraine une modification progressive des orbites des satellites évoluant à des altitudes différentes, la force résultant du champ de gravitation terrestre exercée sur un corps dépendant de sa distance par rapport à la Terre.

Ainsi, si on considère l'orbite initiale comme orbite de référence, les satellites qui ont atteint des altitudes de dérive distinctes de l'altitude initiale ont leur orbite qui se modifie progressivement par rapport à l'orbite initiale. Cette modification de l'orbite se traduit par une modification de la longitude du nœud ascendant Ω, qui augmente pour les satellites ayant une orbite de dérive dont l'altitude est plus faible que l'altitude initiale, et qui diminue pour les satellites ayant une orbite de dérive plus élevée que l'altitude initiale. La trajectoire des différentes orbites des satellites reste toutefois identique ; seule la longitude du nœud ascendant Ω est modifiée.

On note que l'orbite initiale est ici choisi comme orbite de référence, mais que ce choix est arbitraire et vise uniquement à décrire le décalage des orbites des satellites les unes par rapport aux autres.

L'échelonnement dans le temps de l'envoi des différents satellites à leurs altitudes de dérive respectives permet d'obtenir différentes valeurs de décalage, bien que plusieurs satellites soient envoyés à des altitudes de dérive identiques.

On représente sur la figure 5 l'évolution au cours du temps de la de la longitude du nœud ascendant Ω pour les six satellites considérés.

On remarque sur cette figure 5 plusieurs changements de pente des courbes d'évolution au cours du temps de la longitude du nœud ascendant Ω, ces changements de pente correspondant à des variations d'altitude des satellites considérés.

Les satellites sont ensuite ramenés à une orbite finale, lors d'une étape de pilotage final 40, lors de laquelle les différents satellites sont pilotés de manière à être amenés à une altitude finale à partir de leurs altitudes de dérive respectives.

L'altitude finale est typiquement comprise entre l'altitude initiale et l'altitude de dérive basse. L'altitude finale peut également appartenir à l'ensemble de dérive ; tout ou partie des satellites n'ont alors pas à modifier leur altitude lors de cette étape de pilotage final 40. L'altitude finale est typiquement comprise entre 200 et 800km, ce qui correspond à l'altitude communément utilisée pour des satellites d'observation. Dans l'exemple représenté, les satellites sont successivement amenés à l'altitude finale qui est de 420km.

En variante, les satellites peuvent être amenés simultanément à l'altitude finale, ou par groupes de satellites.

Cette étape de pilotage final est configurée de manière ce qu'une fois les satellites amenés à l'altitude finale, leurs orbites respectives soient décalées les unes par rapport aux autres, par exemple de manière à ce que les différentes orbites présentent une même inclinaison i par rapport au plan équatorial identique, mais que la longitude du nœud ascendant Ω de chaque orbite soit distincte. L'inclinaison est par exemple égale à 96°. L'inclinaison des orbites finales peut être identique ou distincte de celle des orbites initiales.

Les orbites finales des différents satellites sont ainsi selon des trajectoires identiques, mais décalées les unes par rapport aux autres par rotation autour d'un même axe, ici l'axe de rotation terrestre.

Dans le mode de réalisation représenté, les étapes de pilotage 20, de dérive 30 et de pilotage final 40 sont configurées de manière à ce que la variation de longitude du nœud ascendant Ω entre les orbites de deux satellites adjacents soit constante une fois les satellites ramenés à l'altitude finale, et ici égale à 15°.

Comme on le voit sur la figure 4, les étapes de pilotage 20, de décalage 30 et de pilotage final 40, se chevauchent ; par exemple, certains satellites effectuent leur pilotage final 40 tandis que d'autres sont encore en étape de décalage 30.

La figure 6 présente un exemple de constellation de satellites déployés au moyen d'un procédé selon un aspect de l'invention.

On représente sur cette figure les orbites O1 à O6 des 6 satellites décrits précédemment en référence aux figures 4 et 5. Comme indiqué précédemment, les étapes de pilotage 20, de dérive 30 et de pilotage final 40 sont configurées de manière à ce que la variation de longitude du nœud ascendant Ω entre les orbites de deux satellites adjacents soit telle que une fois les satellites ramenés à l'altitude finale, le dΩ réalisé soit constant entre deux orbites successives.

Le procédé ainsi décrit permet donc de déployer une pluralité de satellites d'une constellation de satellites en un unique lancement, et de réaliser un décalage de leurs orbites respectives en exploitant le potentiel gravitationnel terrestre. Le procédé peut être utilisé pour le déploiement de constellations satellites selon tous types d'orbites ; circulaire, elliptique, en orbite basse ou en orbite haute.

Ce procédé permet donc de ne pas nécessiter une consommation en ergol importante pour réaliser la modification de l'orbite des satellites, et de réduire de manière significative le nombre de lancements nécessaires pour un tel déploiement.

En fonction des orbites finales souhaitées, la mise en place d'une constellation de satellites peut ainsi être réalisée en moins d'un an.

A titre d'exemple, le déploiement d'une constellation de 12 satellites au moyen de deux lancements de 6 satellites chacun mettant en oeuvre la méthode proposée peut être réalisé en moins d'un an.

## Revendications

1. Procédé de déploiement d'une constellation de satellites, dans lequel
- au moyen d'un lanceur unique, on déploie (10) une pluralité de satellites à une même altitude initiale sur une même orbite initiale,
- lesdits satellites sont pilotés (20) de manière à ce que selon l'orbite initiale, chaque satellite atteigne une altitude de dérive parmi un ensemble de dérive, à laquelle les orbites des différents satellites se décalent (30) les unes par rapport aux autres sous l'effet du potentiel gravitationnel terrestre,
- les satellites sont pilotés de manière à être déplacés (40) séquentiellement pour atteindre une même altitude finale, ledit déplacement séquentiel étant réalisé de manière à ce que les satellites décrivent des orbites finales ayant une même inclinaison par rapport au plan équatorial, mais présentant des longitudes du nœud ascendant distinctes.

2. Procédé selon la revendication 1, dans lequel les orbites finales des satellites sont décalées angulairement les unes par rapport aux autres autour de l'axe de rotation terrestre.

3. Procédé selon la revendication 2, dans lequel lesdites orbites finales présentent un décalage angulaire (dΩ) constant entre deux orbites finales successives.

4. Procédé selon l'une des revendications 1 à 3, dans lequel ledit ensemble de dérive comprend une altitude de dérive haute et une altitude de dérive basse, ayant respectivement une altitude plus élevée et plus faible que l'altitude initiale.

5. Procédé selon la revendication 4, dans lequel l'altitude de départ l'altitude de dérive haute, l'altitude de dérive basse et l'altitude finale sont comprises entre 150 km et 75000 km.

6. Procédé selon l'une des revendications 4 ou 5, dans lequel l'altitude finale desdits satellites est comprise entre l'altitude initiale et l'altitude de dérive basse.

7. Procédé selon l'une des revendications 1 à 6, dans lequel ladite altitude finale est comprise entre 200 et 800 km.

8. Procédé selon la revendication 6, dans lequel l'altitude de départ est de 800 km, l'altitude de dérive haute est de 1500 km, l'altitude de dérive basse est de 270 km et l'altitude finale est de 420 km.

9. Procédé selon la revendication 5, dans lequel l'altitude de départ est comprise entre 33000 et 38000 km, et l'altitude finale est comprise entre 20000 et 25000 km.

10. Procédé selon l'une des revendications 1 à 9, dans lequel les orbites finales desdits satellites ont des inclinaisons distinctes par rapport à leurs orbites initiales.

## Patentansprüche

1. Verfahren zum In-Einsatz-Bringen einer Konstellation von Satelliten, wobei
- mittels einer einzelnen Trägerrakete mehrere Satelliten auf dieselbe anfängliche Höhe auf derselben anfänglichen Umlaufbahn in Einsatz gebracht (10) werden,
- die Satelliten auf solche Weise gesteuert (20) werden, dass gemäß der anfänglichen Umlaufbahn jeder Satellit eine Abdrifthöhe aus einer Menge an Abdrift(höhen) erreicht, auf welcher die Umlaufbahnen der unterschiedlichen Satelliten in Bezug auf einander unter der Wirkung der Erdanziehungskraft versetzt (30) sind,
- die Satelliten auf solche Weise gesteuert werden, dass sie sequenziell bewegt (40) werden, um dieselbe endgültige Höhe zu erreichen, wobei die sequenzielle Bewegung auf solche Weise erfolgt, dass die Satelliten endgültige Umlaufbahnen beschreiben, die dieselbe Neigung in Bezug auf die Äquatorialebene aufweisen, jedoch sich voneinander unterscheidende aufsteigende Knotenlängen zeigen.

2. Verfahren nach Anspruch 1, wobei die endgültigen Umlaufbahnen der Satelliten in Bezug aufeinander winkelmäßig um die Erdrotationsachse herum versetzt sind.

3. Verfahren nach Anspruch 2, wobei die endgültigen Umlaufbahnen eine konstante winkelmäßige Versetzung (dΩ) zwischen zwei aufeinanderfolgenden endgültigen Umlaufbahnen aufweisen.

4. Verfahren nach einem der Ansprüche 1 bis 3, wobei die Menge an Abdrift(höhen) eine hohe Abdrifthöhe und eine tiefe Abdrifthöhe umfasst, die jeweils eine höhere und eine tiefere anfängliche Höhe aufweisen.

5. Verfahren nach Anspruch 4, wobei die Starthöhe, die hohe Abdrifthöhe, die tiefe Abdrifthöhe und die endgültige Höhe zwischen 150 km und 75.000 km liegen.

6. Verfahren nach einem der Ansprüche 4 oder 5, wobei die endgültige Höhe der Satelliten zwischen der anfänglichen Höhe und der tiefen Abdrifthöhe liegt.

7. Verfahren nach einem der Ansprüche 1 bis 6, wobei die endgültige Höhe zwischen 200 und 800 km liegt.

8. Verfahren nach Anspruch 6, wobei die Starthöhe 800 km beträgt, die hohe Abdrifthöhe 1500 km beträgt, die tiefe Abdrifthöhe 270 km beträgt und die endgültige Höhe 420 km beträgt.

9. Verfahren nach Anspruch 5, wobei die Starthöhe zwischen 33.000 und 38.000 km liegt, und die endgültige Höhe zwischen 20.000 und 25.000 km liegt.

10. Verfahren nach einem der Ansprüche 1 bis 9, wobei die endgültigen Umlaufbahnen der Satelliten sich voneinander unterscheidende Neigungen in Bezug auf ihre anfänglichen Umlaufbahnen aufweisen.

## Claims

1. A method of deploying a constellation of satellites, the method comprising the following steps:
· using a single launcher to deploy (10) a plurality of satellites at the same initial altitude on the same initial orbit;
· controlling (20) said satellites in such a manner that, depending on the initial orbit, each satellite reaches a drift altitude selected from a drift set, with the orbits of the various satellites shifting (30) relative to one another at the respective drift altitudes under the effect of the gravitational potential of the Earth; and
· controlling (40) the satellites in such a manner as to be moved sequentially in order to reach the same final altitude, said sequential movement being performed in such a manner that the satellites describe final orbits having identical trajectories with the same angle of inclination relative to the equatorial plane, but presenting distinct longitudes for their ascending nodes.

2. A method according to claim 1, wherein the final orbits of the satellites are angularly offset relative to one another about the Earth's axis of rotation.

3. A method according to claim 2, wherein said final orbits present a constant angular offset (dΩ) between two successive final orbits.

4. A method according to any one of claims 1 to 3, wherein said drift set comprises a high drift altitude and a low drift altitude, having respectively an altitude that is higher and an altitude that is lower than the initial altitude.

5. A method according to claim 4, wherein the starting altitude, the high drift altitude, the low drift altitude, and the final altitude lie in the range 150 km to 75,000 km.

6. A method according to claim 4 or claim 5, wherein the final altitude of said satellites lies between the initial altitude and the low drift altitude.

7. A method according to any one of claims 1 to 6, wherein said final altitude lies in the range 200 km to 800 km.

8. A method according to claim 6, wherein the starting altitude is 800 km, the high drift altitude is 1500 km, the low altitude is 270 km, and the final altitude is 420 km.

9. A method according to claim 5, wherein the starting altitude lies in the range 33,000 km to 38,000 km, and the final altitude lies in the range 20,000 km to 25,000 km.

10. A method according to any one of claims 1 to 9, wherein the final orbits of said satellites have angles of inclination that are different from their initial orbits.
